# EUROPEAN PATENT APPLICATION

(11) **EP 3 396 153 A1**
(43) Date of publication of application: **31.10.2018**
(21) Application number: 17167730.5
(22) Date of filing: 24.04.2017
(51) Int. Cl.: F03D 1/02, F03D 1/04

(54) **A COMBINATION OF A WIND JET TURBINE AND A WIND TURBINE**

(71) Applicant: Ostertag, Albert, 81737 München (DE)
(72) Inventor: Ostertag, Albert, 81737 München (DE)

(57) **Abstract**

The wind turbine system (Fig.1, Fig. 2) is a combination of a wind jet turbine (03) and a wind turbine. A wind turbine system (Fig.1, Fig. 2) is assembled around a wind jet turbine (03). The wind turbine hub (02) and the wind turbine hub carrier (01) act as mantle or shroud for the wind jet turbine (03). The wind turbine rotates axial in one direction (13) and the wind jet turbine rotates axial in the opposite direction (14). One part of the generator (e. g. stator (33)) turns with the wind turbine hub (02) and the other part of the generator (e. g. rotor (32)) turns with the wind jet turbine (03).

## Description

### Technical Field

The present invention relates to a wind turbine system wherein a wind jet turbine is assembled.

### Background Art

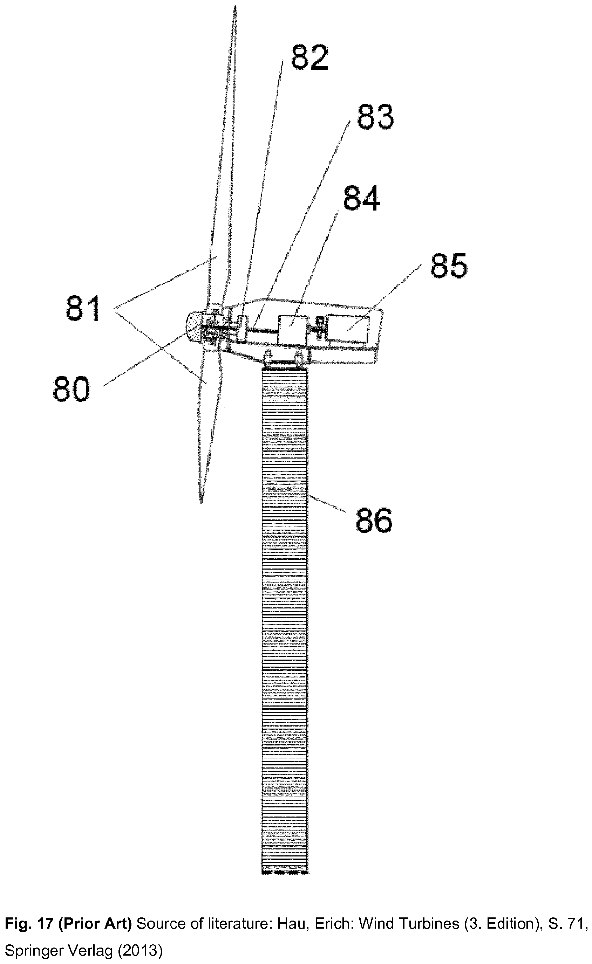

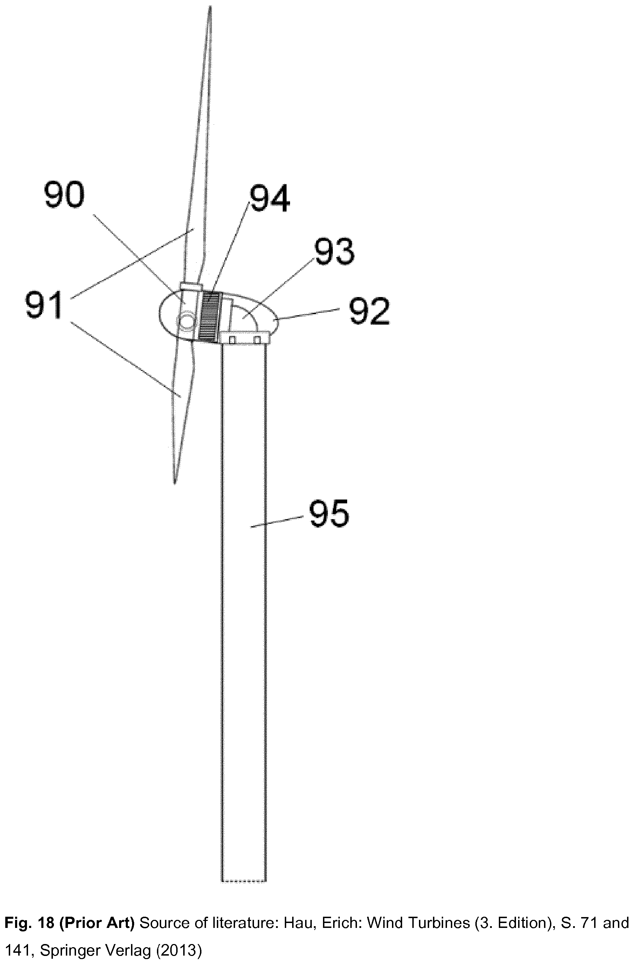

Modern wind turbine systems can be quite large. Many turbine designs have a wind turbine tower (Fig. 17 (86), Fig. 18 (96)) height exceeding 100 meters, and rotor diameters in excess of 80 meters. The blades (Fig. 17 (81), Fig. 18, (91)) have a root section mounted to the rotor hub (Fig. 17 (80), Fig. 18 (90)), with the aerodynamic shape of the blades defined radially outboard of the root section. This configuration results in a central "dead" wind zone that is coaxial to the rotor hub wherein virtually no energy is extracted from the wind by the blades and has therefore no important effect on the rotation of the rotor. Accordingly, a large scale wind turbine system has its corresponding large aerodynamic dead zone.

In this regard, the industry would benefit from improvements or advancements in wind turbine design and operation that would utilize the energy from the central dead wind zone to increase the output of the wind turbine.

Wind power is considered one of the cleanest, most environmentally friendly energy sources presently available, and wind turbines have gained increased attention and importance in this regard. However, the cost benefit analysis of wind energy systems is a cycle of constant consideration.

There is a general desire for wind turbines to produce as much energy as possible for a given wind speed. However, the inner part of a wind turbine rotor has to meet constraints related to structure and movement, which make it difficult to optimize this section.

The state of the art rotor blades are optimized for a maximum efficiency, therefore the inner part of the rotor blade is formed with very large blade depths. Such rotor blades are, for example, used by the company Enercon in the E-70 type wind turbine, and patented for example under the following U. S. patent No. 7,914,261; 8,100,663. However, this rotor blades have a very large area at the rotor blade root section which generates very high loads at high wind speeds. The wind turbine systems have to be switched off regularly in this case. However, for these very high loads, the entire wind energy installation has to be designed (dimensioned).

A further attempt to improve the efforts to harness wind energy is the use of auxiliary fins on the nose cone of the rotor hub, for example U. S. patent application No. 20120051916, which also generates very high loads at high wind speeds on the wind turbine system.

Traditionally, wind turbines (Fig. 17, Fig. 18) use a single rotor to capture the kinetic energy of the wind. However dual rotor wind turbines are known in the art (such as in U. S. patent No. 4,039,848, U. S. patent. No. 5,506,453, and U. S. patent No. 6,278,197). These wind turbines use counter-rotating propellers to jointly produce power output.

Wind turbines with dual rotors have generally a configuration were the rotors are arranged in series (such as in U. S. patent No. 6,278,197, U. S. patent No. 4,039,848). These arrangements have a disadvantage. The disadvantage results of the wake of the first rotor luv sided (windward). The reduced flow velocity and turbulences in the wake of the first rotor (luv sided/windward) reduce the energy output of the second rotor (lee sided/leeward).

A challenge to an inventor of a dual rotor wind turbine systems is to prevent aerodynamic interference between the rotors.

The rotating speed of wind turbine rotors, their power output and load on the wind turbine is commonly aligned with other components of the wind turbine assembly (e. g. drive train, gear box, generator, bearings) to raise the energy output to the maximum. This concern can be realized with counter-rotating parts of a generator (rotor, stator). In conventional wind turbines (Fig. 17, Fig. 18) only one part of the generator (e. g. rotor) rotates. In dual rotor turbines it is common to use counter rotating power generating components to raise the energy output (such as in U. S. patent No. 4,039,848 and U. S. patent No. 5,506,453).

One concern in the design of wind turbines is to safeguard components, which are subject to forces and torques, against overload occurring, for example, at extreme wind conditions, at the occurrence of gusts, or at sudden changes in the wind direction. In the case of storm (wind speed 20,8 - 24,4 m/s) (cp. QUASCHNING, Volker; Regenerative Energiesysteme; 9th Edition; p. 275) conventional wind turbines have to shut down. Offshore wind turbines have an operation realm up to wind speeds of 26 m/s.

Furthermore, when the input wind speed is above the rated wind speed, a mechanical stress/load can be created that exceeds the point where the wind turbine system can operate safely without break down.

A further disadvantage of large wind turbines is that, if the wind speed is low, they cannot extract energy out of the wind stream because the wind has not enough power to let the wind turbine rotor rotate. Small turbines, like wind jet turbines, can extract energy out of the wind stream when the wind speed is low.

The drive train of conventional wind turbines (Fig. 17) with its components is prone to vibrations. These components of the drive train such as rotor hub (Fig. 17 (80)), wind turbine shaft (Fig. 17, (83)), gearbox (Fig. 17 (84)) and generator (Fig. 17 (85)) have such miscellaneous mass distributions and material properties, that vibrations under extreme conditions are obvious.

Wind jet turbines are known in the art (such as in U. S. patent No. 8,021,100; World Intellectual Property Organisation No. WO 2010/107830). These wind jet turbines generally have smaller turbine rotors and smaller generators than conventional wind turbines (Fig. 17), therefore they cannot produce/generate as much energy as a wind turbine system with a bigger turbine rotor and a bigger generator.

### Summary of invention

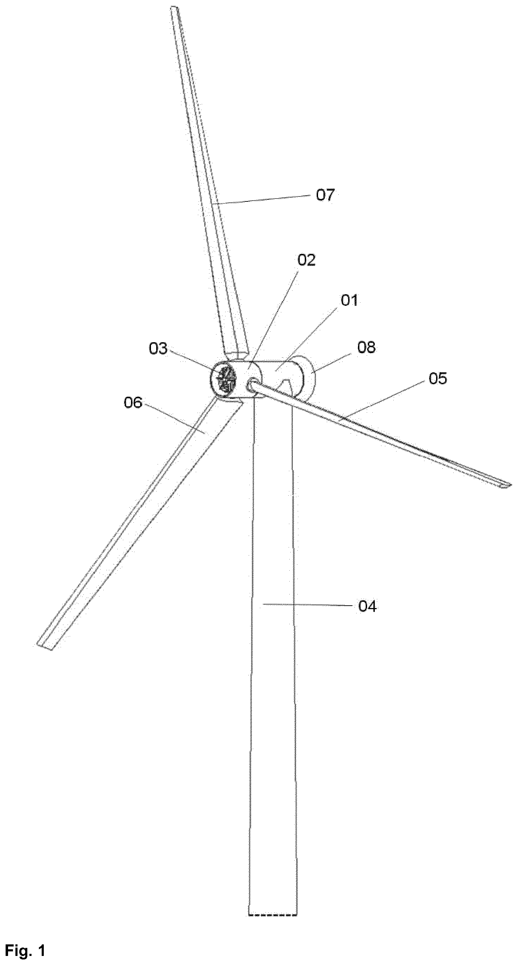

An object of the present invention (Fig. 1) is to provide a merger of a large wind turbine and a wind jet turbine.

Another object of the present invention is to provide a wind jet turbine (03) placed in the center of the wind turbine hub (02) to create a smaller aerodynamic dead zone within the wind turbine's aerodynamic performance.

Another object of the present invention is, that the down time of the system is low, because the system can operate under low wind speeds and as well as under very high wind speeds in part operation. The standstill periods of the wind turbine are limited to windstill and hurricane. The variable system capacity improves the energy output caused by the broad operation spectrum of the system.

Another object of the present invention is to provide a coupling of the generator where the rotational force of two turbine rotors of different revolutions per minute and different rotating directions (13, 14) drives the generator (15).

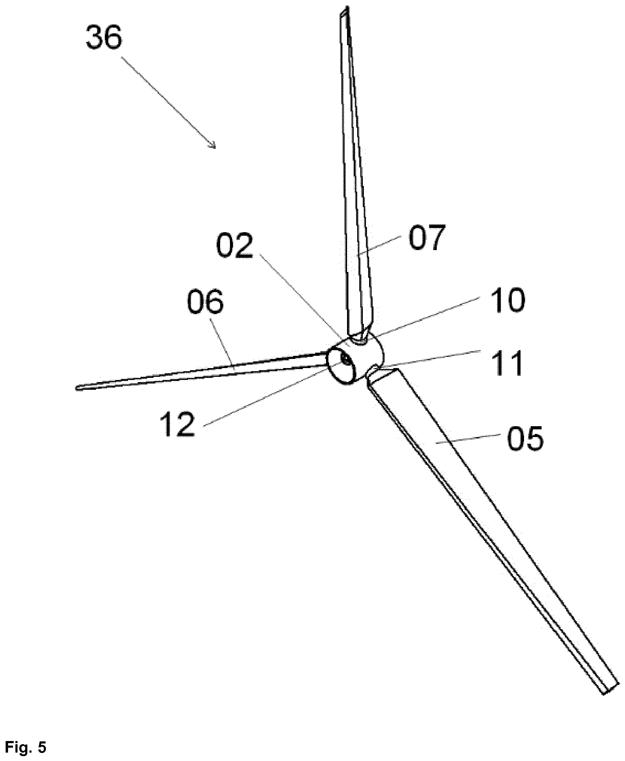

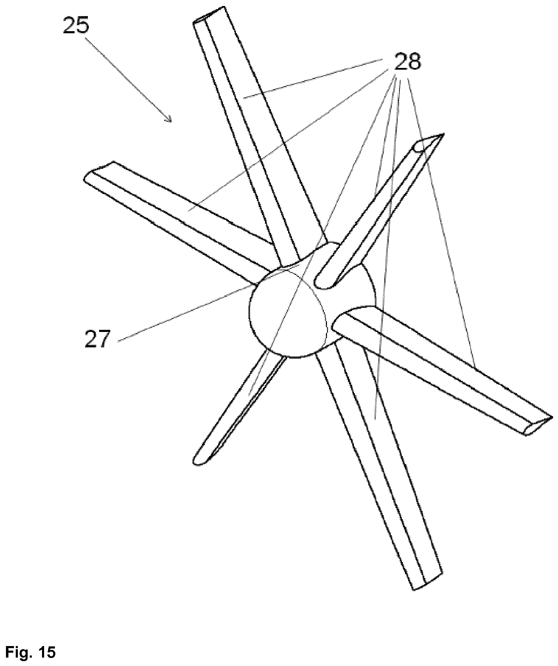

Another object of the present invention is that the rotors (Fig. 5 and Fig. 15) of the wind turbine system do not aerodynamically influence each other, because they are not assembled in series (in row) or back-to-back. The rotors of the wind turbine and the wind jet turbine are aerodynamically separated by the wind turbine hub (02) and the wind turbine hub carrier (01).

A further object of the present invention is that the wind collecting inlet design of the embodiments contracted the air stream to increase its velocity through the wind jet turbine shroud (venturi effect). The wind turbine hub (02) and the wind turbine rotor hub carrier (01) act as a turbine shroud or mantle which increase the rotor efficiency of the wind jet turbine (03).

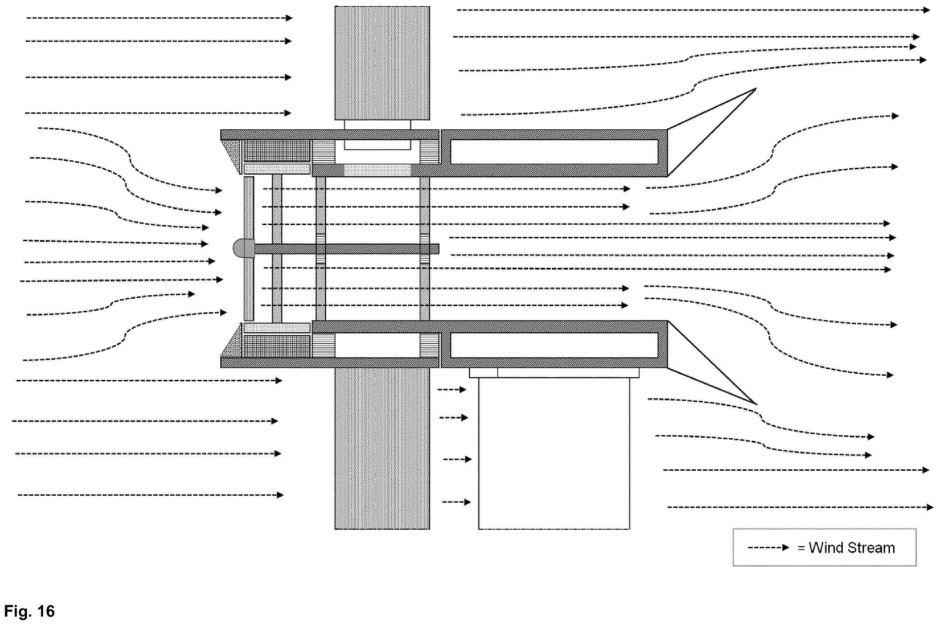

Another object of the present invention is that the diffuser generates an additional circulatory flow. This circulatory flow reinforces the wind stream through the wind jet turbine system (Fig. 16).

A further object of the present invention is that the wind turbine system is not prone to vibrations, because the system has no complex drive train with miscellaneous mass distributions and material properties that can cause vibrations under extreme conditions.

Accordingly, it is an object of the present invention to provide an improved wind turbine system for generating electricity.

Other objects and the scope of applicability of the present invention will become apparent from the detailed description given hereinafter. It should be understood, however, that the detailed description and the specific examples, while indicating preferred embodiments of the invention, are given by the way of illustration only since various changes and modifications within the spirit and scope of the invention will become apparent to those skilled in the art from this detailed description.

### Brief description of drawings

The foregoing aspects and other features of the present invention are explained in the following description, taken in connection with the accompanying drawings, wherein:
Fig. 1 is a perspective side view of a wind turbine system embodying the present invention.
Fig. 2 is a detailed perspective side view of the wind turbine system.

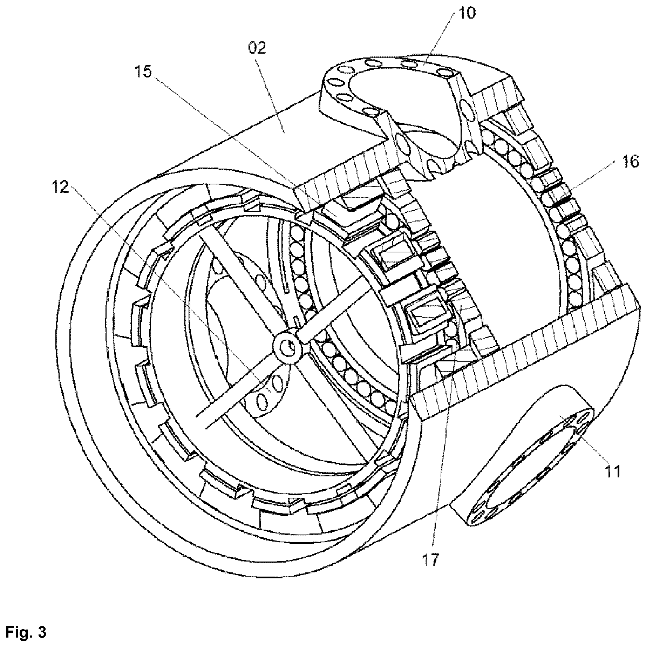

Fig. 3 is a perspective sectional view of the wind turbine rotor hub (02) and of components within the hub assembly.
Fig. 4 is a cross sectional side view of the wind turbine hub and of the components arranged within the hub assembly of the invention. The wind turbine hub is divide in two sections. First section is the front part (19) (left bracket) of the wind turbine hub (02), and the second part is the rear part (20) (right bracket) of the wind turbine hub (02).
Fig. 5 is a perspective view of the wind turbine rotor where the wind turbine rotor hub (02) is shown with a plurality of rotor blades (05, 06, 07), and a plurality of rotor blade connections (10, 11, 12).
Fig. 6 is a perspective side view of the rotor hub carrier (01) with a plurality of maintenance holes (18) and a plurality of wind jet turbine shaft carriers (23, 24).
Fig. 7 is a side view of the wind turbine rotor hub carrier (01). Reference sign 21 (left bracket) shows the front part of the wind turbine rotor hub carrier (21). Reference sign 22 (right bracket) shows the rear part of the wind turbine rotor hub carrier (22).
Fig. 8 is an exploded view of the nacelle of the wind turbine system with the following exploded parts: wind turbine rotor hub carrier (01), two wind jet turbine shaft carrier (23, 24); bearing (16), wind turbine rotor hub (02), bearing (17), generator (15), wind jet turbine funnel (09), wind jet turbine rotor (25), wind jet turbine shaft (26).
Fig. 9 is a side schematic illustration/representation of the wind turbine system.
Fig. 10 is a cross sectional side view of the wind turbine system with the following designated embodiments: 01 wind turbine rotor hub carrier (01), wind turbine hub (02), funnel (09), generator (15), wind turbine hub/wind turbine hub carrier bearing (16), wind turbine hub/wind turbine hub carrier bearing (17), wind jet turbine shaft carriers (23, 24), wind jet turbine rotor (25), wind jet turbine shaft (26), rotor carrier (35).
Fig. 11 is a side schematic illustration/representation of the turbine system where the term "construction height" will be defined.
Fig. 12 is a perspective view of a generator where the stator (33) is in the outer ring and the rotor (32) in the inner ring.
Fig. 13 is a perspective view of an alternative generator where the rotor (42) is in the outer ring and the stator (43) in the inner ring.
Fig. 14 is a perspective view of a further alternative generator where the rotor (52) and the stator (53) are arranged in series.
FIG 15 is a perspective side view of the wind jet turbine rotor (25) with a plurality of wind jet turbine blades (28).
Fig. 16 is a detailed illustration/representation of the wind turbine system where the wind stream is depicted around and through the wind turbine system.
FIG 17 is a perspective illustration of a wind turbine system with a conventional drive train **(prior art)** and with the following designated embodiments: wind turbine hub (80), wind turbine blades (81), bearing (82), wind turbine shaft (83), gearbox (84), generator (85), tower (86).
FIG 18 is a perspective illustration of a wind turbine system with a direct drive **(prior art)** and with the following designated embodiments: wind turbine Hub (90), wind turbine blades (91), nacelle (92), machine carrier (93), generator (94), tower (95).
Fig. 19 is a perspective side view of the rotor hub carrier (01) with a plurality of maintenance holes (18) and a plurality of wind jet turbine shaft carriers (23, 24) and the arrangement of the bearings (16, 17).

### Description of embodiments

Reference now will be made in detail to the embodiments of the present invention, which are illustrated in one or more examples of the drawings. Each example is provided by the way of explanation of the invention, and not as a limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention covers such modifications and variations as come within the scope of the appended claims and their equivalents.

Fig. 1 illustrates a wind turbine system having various conventional components, including a tower (04) with a nacelle mounted thereon. The nacelle of this invention is composed of a wind turbine hub carrier (01) and a wind turbine hub (02). A plurality of turbine blades (05, 06, 07) are mounted on the wind turbine hub (rotor hub) (02). The wind turbine rotor hub rotates on a plurality of bearings (16, 17) around the wind turbine hub carrier (01).

In this invention the wind turbine hub (02) has no nose cone like regular types of wind turbine hubs (Fig. 16, Fig. 17). The wind turbine rotor hub (02) houses a wind jet turbine (03). The wind turbine rotor hub (02) and parts behind (wind turbine carrier (01), diffusor (08)) are also function as mantle, duct or a turbine shroud for the wind jet turbine (03).

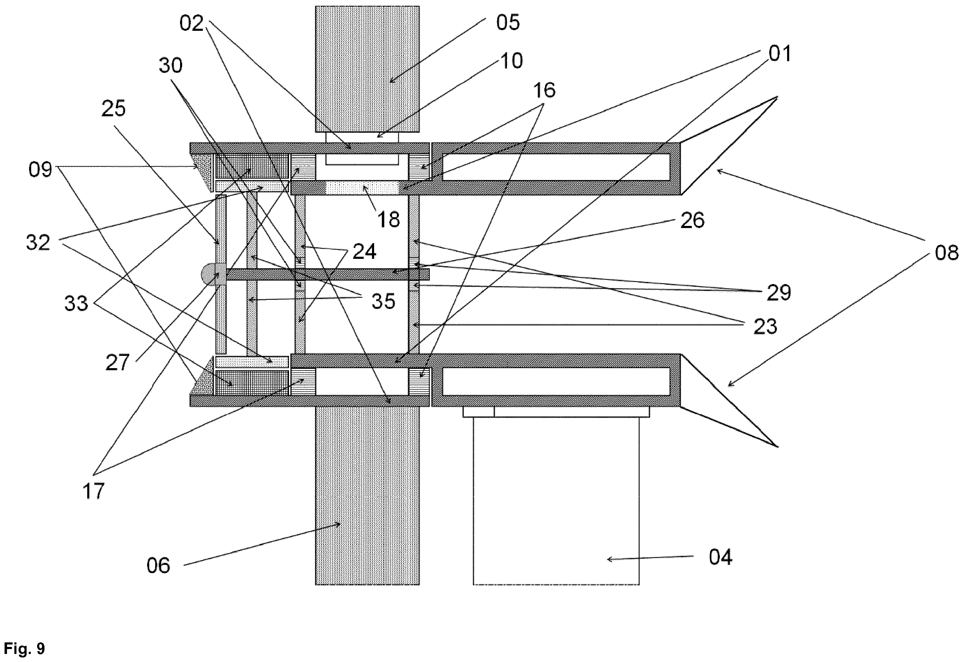

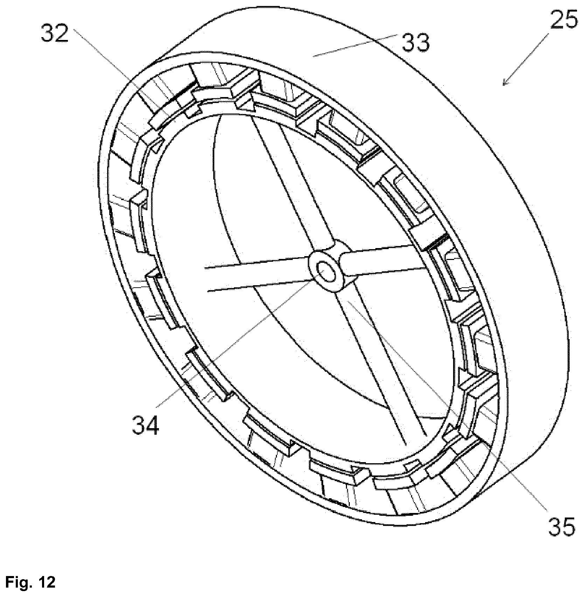

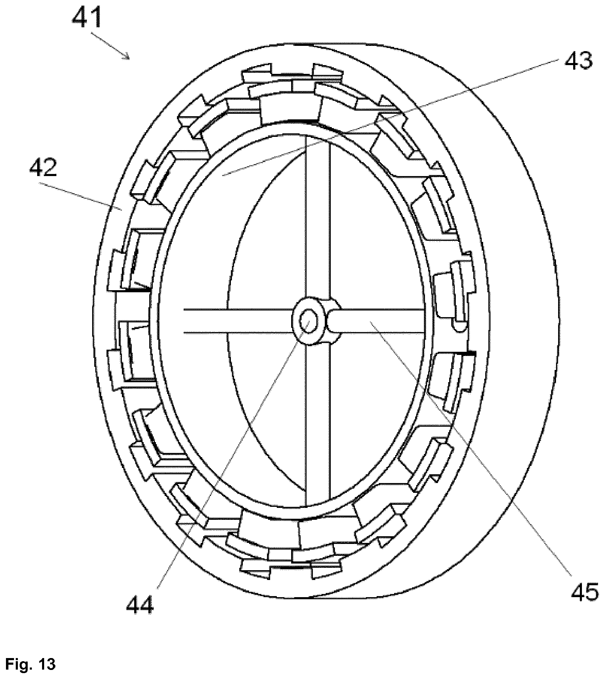

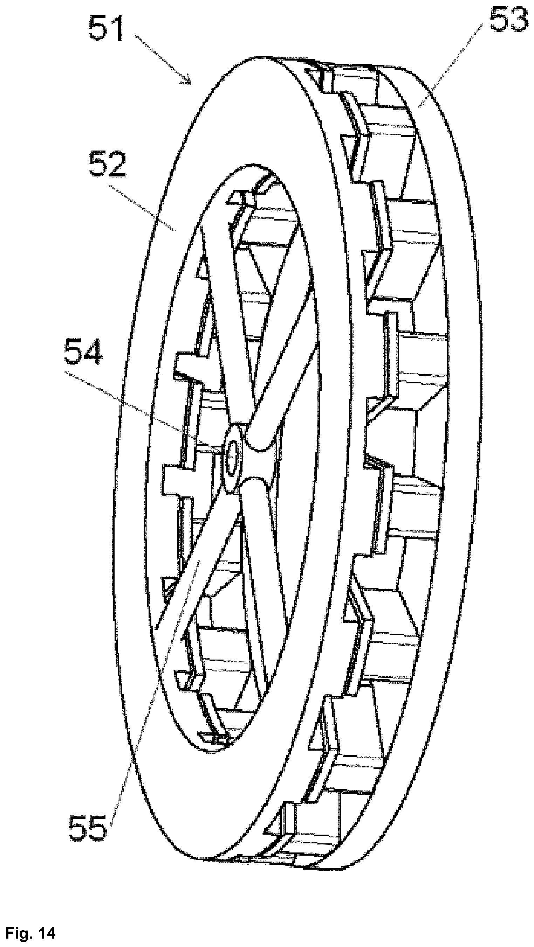

The wind turbine rotor (36) and the wind jet turbine rotor (25) extract the energy out of the wind stream (Fig. 16). The rotation of the rotors (wind turbine rotor (36); wind jet turbine rotor (25)) generates torque in a specific direction. The torque of the rotors (wind turbine rotor (36); wind jet turbine rotor (25)) is transferred over the arranged embodiments (Fig. 9) to the power generating components (Fig. 12 (alternative generators: Fig. 13 or Fig. 14)) to produce energy.

The rotor blades (05, 06, 07) of the wind turbine are mounted so that they turn the wind turbine hub (02) in the wind stream in a specific direction (13). The wind jet turbine blades (28) are mounted that they turn the wind jet turbine rotor hub (28) in the wind stream in the opposite direction (14) of the wind turbine rotor (36) (Fig. 5).

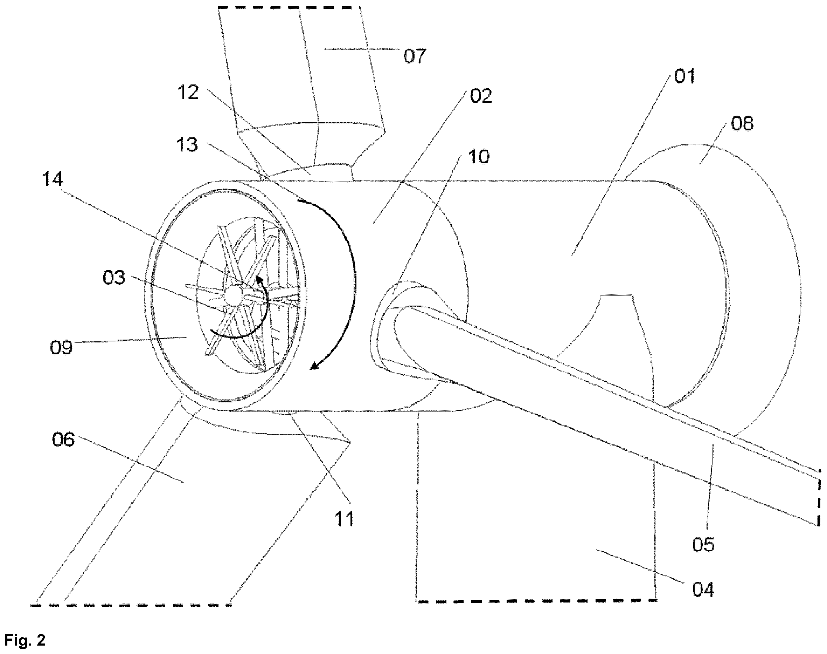

The direction of rotation (13) (arrow) of the wind turbine rotor (Fig. 2) is determined by the profile of the mounted rotor blades (05, 06, 07).

The direction of rotation of the wind jet turbine (14) is determined of the profile of the mounted blades (28) of the wind jet turbine (03).

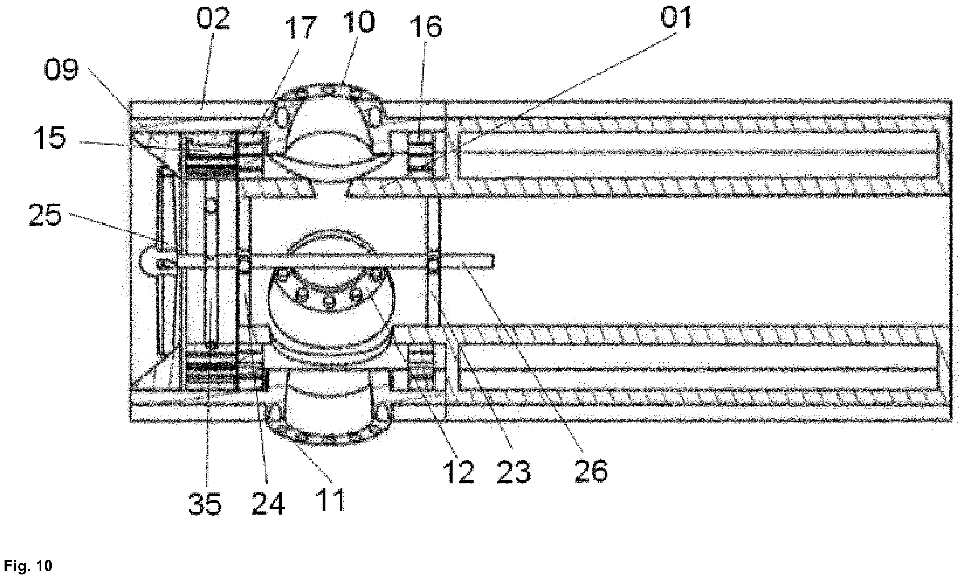

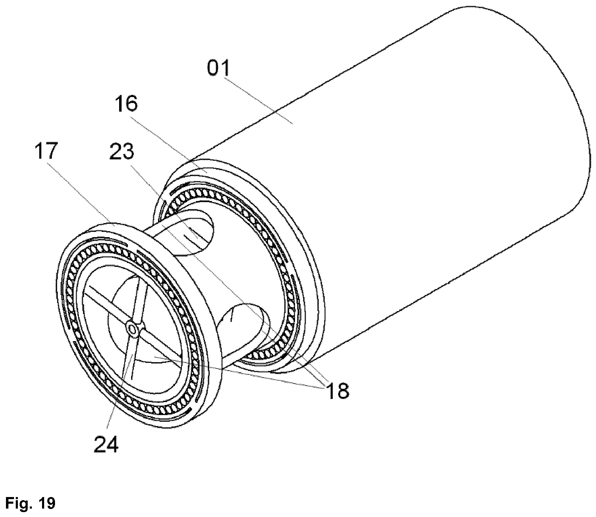

The rear part of the wind turbine hub (20) is rotationally coupled with the front part of the wind turbine carrier (21) via bearings (16, 17) (Fig. 10, Fig. 19).

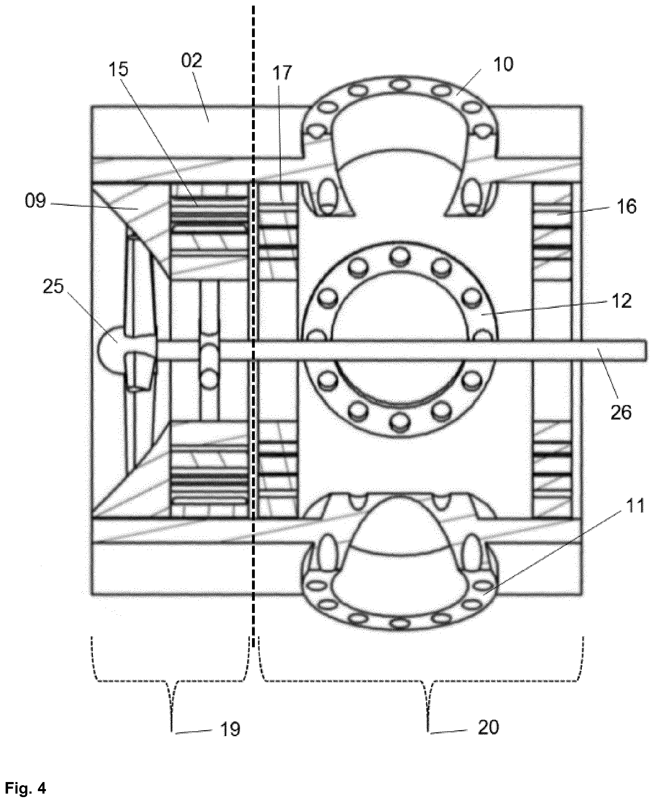

The power generating components are assembled in the front part of the wind turbine hub (19) (Fig. 4).

The wind jet turbine rotor (25) is coupled via wind jet turbine shaft (26) to the shaft hole (34) of the rotor carrier (35). The shaft hole (34) is (a hole) in the center of the rotor carrier (35). The rotor carrier (35) is assembled with the generator rotor (32). The stator (33) of the generator (Fig. 12) is mounted with the wind turbine rotor hub (02).

The generated torque of the wind jet turbine rotor (25) (Fig. 15) is transferred via the wind jet turbine shaft (26) to the rotor carrier (35) which is assembled with the generator rotor (32).

The torque generated from the wind turbine rotor (36) rotates the coupled part of the generator (e. g. stator (33)).

The result of counterpart direction rotating turbines are that the generator (15) (Fig. 12) produces more energy, because one part of the generator turns in one direction and the other part of the generator turns in the opposite direction. Due to this construction the total rotating speed of the generator is higher, which means that more energy will be generated.

The bearings (16, 17) are arranged between the wind turbine rotor hub (02) and the wind turbine rotor hub carrier (01). One bearing (17) is left to the rotor blade connections (10, 11, 12) of the wind turbine hub (02) and left to the maintenance holes of the wind turbine hub carrier (01). The other bearing (16) is on the right side of the rotor blade connections (10, 11, 12) (Fig. 10) of the wind turbine rotor hub (02) and on the right side of the maintenance holes of the wind turbine hub carrier (01).

The wind jet turbine rotor (25) and the funnel (09) are assembled in the front part (19) of the wind turbine hub (02). The wind collecting inlet design of the funnel in the front part (19) of the wind turbine hub (02) contract the air stream to increase the wind stream velocity through the wind jet turbine shroud (Fig. 10), which generates a venturi effect inside the wind jet turbine.

Fig. 4 illustrates the wind turbine rotor hub in a cross section side view where the wind turbine hub (02) is divide in two sections (19, 20). First section is the front part (19) of the wind turbine hub (02) and the second part is the rear part (20) of the wind turbine hub (02). In the front part (19) of the wind turbine hub (02) the funnel (09), the wind jet turbine rotor (25), and the generator (15) are assembled. In the rear part of the wind turbine hub (02) the bearings (16, 17) are assembled. One bearing (17) is assembled on the left side of the rotor blade connections (10, 11, 12). The other bearing (16) is assembled on the right side of the rotor blade connections (10, 11, 12).

Fig. 5 illustrates the wind turbine rotor with the wind turbine hub (02) and a plurality of rotor blades connections (10, 11, 12) with rotor blades (05, 06, 07) mounted thereon.

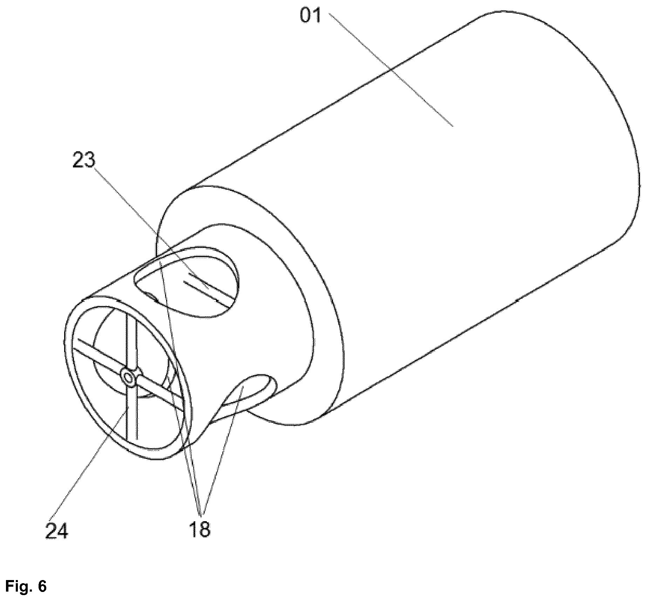

Fig. 6 illustrates the rotor hub carrier (01) with a plurality of wind jet turbine shaft carriers (23, 24) and maintenance holes (18) in the front part (21) of the wind turbine rotor hub carrier (01). The wind jet turbine shaft carriers (23, 24) are assembled before and after the maintenance holes (18). The front part (21) of the rotor hub carrier (01) has a smaller outer diameter than the rear part (22) of the rotor hub carrier (01).

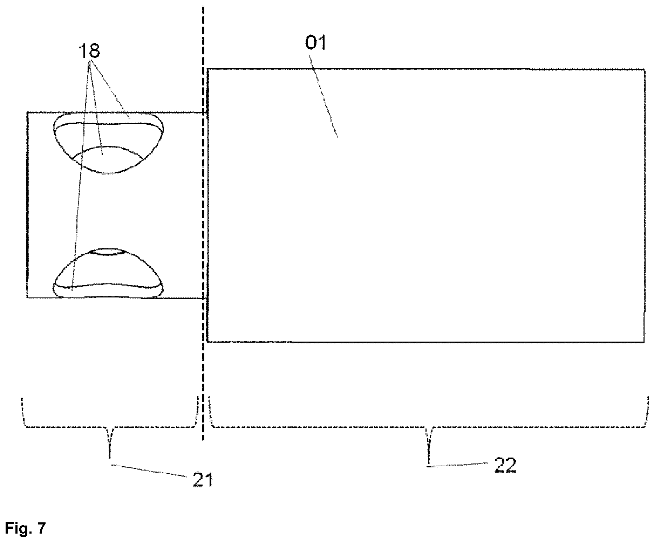

Fig. 7 illustrates the rotor hub carrier (01). The front part of the rotor hub carrier (21) have a plurality of maintenance holes (18) to maintain the rotor blade connections (10, 11, 12) and the pitch system of the rotor blades. The rear part of the rotor hub carrier (22) is mounted on the tower (04).

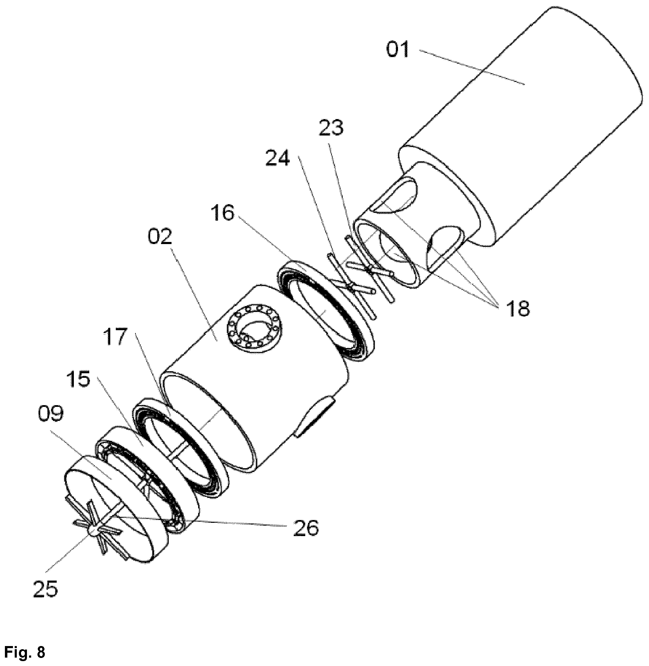

Fig. 8 illustrates an exploded view of the wind turbine nacelle. The wind jet turbine funnel (09) ensures that the wind stream passes the construction height (31) from the outer part of the wind turbine hub (02) to the inner part of the system. The funnel (09) and the wind turbine hub carrier (01) also act as a shroud which surrounds the generator assembly.

Fig. 10 illustrates the assembly of the embodiments of the wind turbine nacelle. Fig. 10 also show the connection of the wind turbine hub carrier (01) via a plurality of bearings (16, 17) with the wind turbine rotor hub (02). The rear part of the wind turbine hub (20) and the front part of the wind turbine hub carrier (21) are plugged/assembled, via bearings (16, 17), onto each other so that the wind turbine rotor hub (02) rotates with its rear part (20) on the front part (21) of the wind turbine hub carrier (01).

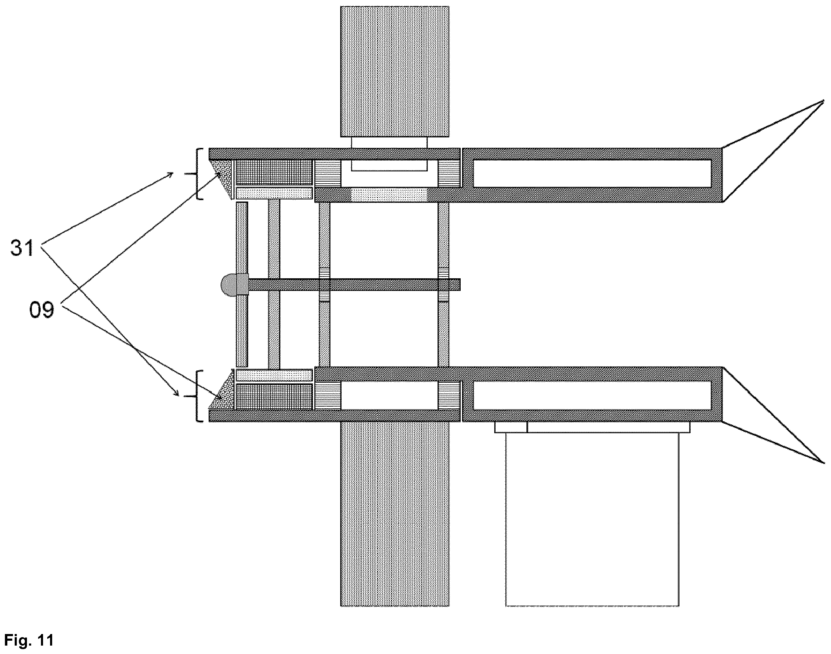

Fig. 11 is the schematic illustration of the turbine system where the term construction height is defined. The funnel directs the wind stream to bypass the structural height (construction height) (31) of the assembly inside the wind jet turbine.

Fig. 12 illustrates a generator were the stator (33) is in the outer part of the generator. The inner part of the generator, the rotor (32) is assembled with a carrier (35). The carrier of the generator rotor has a hole (34) for the wind jet turbine shaft (26). The wind jet turbine shaft (26) is connected to the generator carrier (35) over the shaft hole (34).

Fig. 13 illustrates an alternative generator were the rotor (42) is in the outer part of the generator. The inner part of the generator, the stator (43), is assembled with a carrier (45). The carrier of the generator stator has a hole (44) for the wind jet turbine shaft (26). The wind jet turbine shaft (26) is connected to the generator stator carrier (45) over the shaft hole (44).

Fig. 14 is a perspective view of a further alternative generator where the rotor (52) and the stator (53) are arranged in series and where the rotor (52) and the stator (53) rotates axial in different directions to each other.

The heavier these parts of the power generating components (Fig. 12; Fig. 13; Fig. 14), the more wind speed is necessary to set the wind turbine rotors (25, 36) in motion.

Fig. 15 illustrates the wind jet turbine rotor (25) with a plurality of wind jet turbine blades (28) and the wind jet turbine hub (27).

Fig. 19 illustrates the rotor hub carrier (01) with a plurality of wind jet turbine shaft carriers (23, 24) and maintenance holes (18) and the arrangement of the bearings (16, 17) which carry the wind turbine rotor hub (02).

### Reference signs list

**All part numerals in sequential order:**
- 01: Wind Turbine Rotor Hub Carrier
- 02: Wind Turbine Hub
- 03: Wind Jet Turbine
- 04: Wind Turbine Tower
- 05: Wind Turbine Rotor Blade
- 06: Wind Turbine Rotor Blade
- 07: Wind Turbine Rotor Blade
- 08: Diffusor
- 09: Funnel
- 10: Wind Turbine Rotor Blade Connection
- 11: Wind Turbine Rotor Blade Connection
- 12: Wind Turbine Rotor Blade Connection
- 13: Rotating Direction of Wind Turbine
- 14: Rotating Direction of Wind Jet Turbine
- 15: Generator
- 16: Wind Turbine Hub Bearing (rear)
- 17: Wind Turbine Hub Bearing (front)
- 18: Maintenance Holes
- 19: Front Part of the Wind Turbine Hub
- 20: Rear Part of the Wind Turbine Hub
- 21: Front Part of the Rotor Hub Carrier
- 22: Rear Part of the Rotor Hub Carrier
- 23: Wind Jet Turbine Shaft Carrier (rear)
- 24: Wind Jet Turbine Shaft Carrier (front)
- 25: Wind Jet Turbine Rotor
- 26: Wind Jet Turbine Shaft
- 27: Wind Jet Turbine Hub
- 28: Wind Jet Turbine Blades
- 29: Wind Jet Turbine Shaft Carrier Bearing
- 30: Wind Jet Turbine Shaft Carrier Bearing
- 31: Construction Height
- 32: Generator Rotor
- 33: Generator Stator
- 34: Rotor Carrier Shaft Hole
- 35: Rotor Carrier
- 36: Wind Turbine Rotor

Alternative Generator 1:
- 42: Generator Rotor
- 43: Generator Stator
- 44: Rotor Carrier Shaft Hole
- 45: Rotor Carrier

**Alternative Generator 2:**
- 52: Generator Rotor
- 53: Generator Stator
- 54: Rotor Carrier Shaft Hole
- 55: Rotor Carrier

**Prior Art (Wind Turbine with drive train):**
- 80: Wind Turbine Hub
- 81: Wind Turbine Blades
- 82: Bearing
- 83: Wind Turbine Shaft
- 84: Gearbox
- 85: Generator
- 86: Tower

**Prior Art (Wind Turbine with direct drive):**
- 90: Wind Turbine Hub
- 91: Wind Turbine Blades
- 95: Wind Turbine Generator
- 92: Machine Carrier
- 92: Nacelle
- 96: Tower

### Citation list

HAU, Erich. Wind Turbines. 3rd Edition. Berlin, Heidelberg: Springer-Verlag, 2013. ISBN 3642271502. p. 879.
QUASCHNING, Volker. Regenerative Energiesysteme. 9th Edition. München: Carl Hanser Verlag, 2015. ISBN 3446442677. p. 444.

A wind turbine system, comprising:

## Claims

1. A wind turbine hub and a wind turbine hub carrier which act as a mantle or a shroud for a wind jet turbine. The wind jet turbine is housed in the wind turbine hub.

2. The wind turbine of claim 1, **characterized by** a wind turbine hub rotating in axial direction on a plurality of bearings around a wind turbine rotor hub carrier.

3. The wind turbine of claim 1 and 2, **characterized by** a wind jet turbine rotating axial in counterpart direction to the wind turbine rotor.

4. The wind turbine of claim 1 and 2, **characterized by** power generating components housed in the wind turbine hub.

5. The wind turbine of claim 1 and 2, **characterized by** a wind turbine hub assembled with the stator of the power generating components. The wind turbine hub and the stator rotate in one axial direction, and the wind jet turbine actuates the rotor of the power generating components via the wind jet turbine shaft in counterpart direction. The stator is assembled in the outer ring and the rotor in the inner ring of the power generating components.

6. The wind turbine of claim 1 and 2, **characterized by** a wind turbine hub assembled with the rotor of the power generating components. The wind turbine hub and the rotor of the power generating components rotate in one axial direction, and the wind jet turbine actuates the stator of the power generating components via the wind jet turbine shaft in counterpart direction. The rotor is assembled in the outer ring and the stator in the inner ring of the power generating components.

7. The wind turbine of claim 1 and 2, **characterized by** a wind turbine hub assembled with the stator of the power generating components. The wind turbine hub and the stator rotate in one axial direction, and the wind jet turbine actuates the rotor of the power generating components via the wind jet turbine shaft in counterpart direction. The rotor and the stator of the generator are arranged in series.

8. The wind turbine of claim 1 and 2, **characterized by** a wind turbine hub carrier, which has a plurality of maintenance holes.

9. The wind turbine of claim 1 and 2, **characterized by** a plurality of wind jet turbine shaft carriers are assembled in the wind turbine hub carrier.
